# EUROPÄISCHE PATENTSCHRIFT

(11) **EP 0 626 392 B1**
(45) Veröffentlichungstag und Bekanntmachung des Hinweises auf die Patenterteilung: **20.10.1999**
(21) Anmeldenummer: 94107350.4
(22) Anmeldetag: 11.05.1994
(51) Int. Cl.: C08B 13/00, C08B 15/00, C08G 63/664

(54) **Thermoplastische Cellulose-etherester-Mischpfropfpolymerisate und Verfahren zu ihrer Herstellung**
Thermoplastic graft copolymers ether-ester of cellulose and process for their preparation
Copolymères greffés éther-ester de cellulose thermoplastiques et procédé pour leur obtention

(30) Priorität: 24.05.1993 DE 4317231
(43) Veröffentlichungstag der Anmeldung: 30.11.1994
(73) Patentinhaber: WOLFF WALSRODE AKTIENGESELLSCHAFT, D-29699 Walsrode (DE)
(72) Erfinder: Kalbe, Jochen, Dr., D-55219 Essen (DE); Müller, Hanns Peter, Dr., D-51519 Odenthal (DE); Koch, Rainhard, Dr., D-51065 Köln (DE); Engelhardt, Jürgen, Dr., D-29699 Bomlitz (DE); Koch, Wolfgang, Dr., D-29699 Bomlitz (DE); Szablikowski, Klaus, Dr., D-29664 Walsrode (DE); Weber, Gunter, Dr., D-29683 Fallingbostel (DE)
(74) Vertreter: Pettrich, Klaus-Günter, Dr.

(56) Entgegenhaltungen:
- EP-A- 0 093 368
- GB-A- 2 152 944
- US-A- 4 529 788
- CHEMICAL ABSTRACTS, vol. 93, no. 14, 6. Oktober 1980, Columbus, Ohio, US; abstract no. 134102, & JP-A-55 065 201 (FUJI CHEMICAL CO. LTD.) 16. Mai 1980

## Beschreibung

Die vorliegende Erfindung betrifft neue, thermoplastische Celluloseetherester sowie die Herstellung solcher Cellulosemischpfropfpolymerisate von ungelöster Cellulose mit Epoxiden und Lactid.

Celluloseether, wie z.B. Hydroxyethylcellulose oder Hydroxypropylcellulose sind wasserlösliche Cellulosederivate die durch Veretherung von Alkalicellulose mit Epoxiden, wie z.B. Ethylenoxid oder Propylenoxid hergestellt werden können. Üblicherweise wird hierbei so vorgegangen, daß die Cellulose mit Natronlauge alkalisiert wird und anschließend mit Alkylenoxiden in einem inerten Suspensionsmittel umgesetzt wird (vergl. z. B. EP 0093368; Enzyclopedia of Polymer Science and Technology, Vol. 3, 1985).

Celluloseester, wie z.B. Cellulosetriacetat werden üblicherweise in einem Lösungsprozeß mit Essigsäure als Lösemittel durch Reaktion der Cellulose mit Carbonsäureanhydriden synthetisiert (vergl. Enzyclopedia of Polymer Science and Technology, Vol. 3, 1985). Hierbei dient der Quellungsvorgang in der Essigsäure gleichzeitig zur Aktivierung der Cellulose. Bei Substitutionsgraden größer als 2,5 sind die so gewonnenen Celluloseester thermoplastisch und können zu Formkörpern extrudiert werden.

In der Literatur beschriebene Celluloseetherester werden durch Nachveresterung eines Celluloseethers mit Carbonsäureanhydriden oder auch mit Säurechloriden synthetisiert (vergl. JP 142938; Macromolecules, 18/9, 1985, 1746-52).

Zur Darstellung dieser Mischetherester-Pfropfpolymerisate muß also zunächst nach üblicher Synthese der Celluloseether synthetisiert und isoliert werden. Anschließend erfolgt in analoger Estersynthese die Herstellung des Celluloseetheresters.

Cellulose kann mit Lactonen nach einem noch nicht veröffentlichtem Verfahren zu Cellulosehydroxycarbonsäureestern umgesetzt werden (vgl. P 4228376.0). Hierbei wird Cellulose mit Alkalilauge aktiviert und anschließend in Suspension - ohne die Verwendung cellulosespezifischer Lösungsmittel - mit Lactonen umgesetzt. Dabei entsteht ein polymerer Ester als Celluloseseitenkette. Die so synthetisierten Cellulosehydroxycarbonsäureester sind thermoplastisch und biologisch abbaubar.

Ziel der vorliegenden Erfindung ist die Synthese von neuartigen Celluloseetherestern durch Reaktion von Alkylenoxiden wie Ethylenoxid oder Propylenoxid mit alkalisch aktivierter Cellulose und weiterer Pfropfung des Celluloseethers ohne Isolierung der Zwischenprodukte mit Lactid.

Durch die Kombination von Ether und Ester und die Wahl beliebiger Substitutionsgrade soll dabei ein vergrößertes Spektrum der Eigenschaftsprofile erzielt werden.

Gegenstand der Erfindung sind somit thermoplastische Cellulosederivate aus Cellulose gepfropft mit Alkylenoxiden und Lactonen gemäß Anspruch 1.

Gegenstand der vorliegenden Erfindung ist weiterhin ein Verfahren zur Herstellung von derartigen wasserunlöslichen, thermoplastischen Cellulose-hydroxyalkyl-hydroxycarbonsäureestern, daß dadurch gekennzeichnet ist, daß die Cellulose mit Alkalilauge aktiviert wird und dann entweder in Suspension oder völlig ohne Suspensionsbzw. Lösungsmittel mit Epoxiden und anschließend im gleichen Reaktionsansatz mit Lactid umgesetzt wird.

Die nach diesem Verfahren herzustellenden Cellulose-hydroxyalkylether-hydroxycarbonsäureester lassen sich durch die allgemeine Struktur:

Cell-O-R

beschreiben, wobei Cell-O die substituierten OH-Gruppen einer polymeren Celluloseeinheit präsentieren und R entweder ein mono- und/oder polymerer Hydroxyalkyletherhydroxycarbonsäureester der Struktur X ist:

X = -A-B-

in der A eine lineare Polyetherkette folgender Struktur ist:

A = (-D-O-)ₙ

in der D eine lineare aliphatische verzweigte oder unverzweigte Kette mit 2 bis 11 C-Atomen bedeutet und n eine ganze Zahl gleich oder größer als 1 ist, und B eine lineare Polyesterkette folgender Struktur ist: 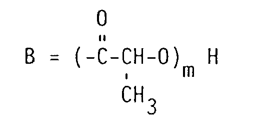 und m eine ganze Zahl gleich oder größer als 1 ist, oder R ist gleich A oder B oder X und deren Kombination in beliebigem Verhältnis, oder R ist entsprechend dem Substitutionsgrad pro Anhydroglucoseeinheit (max. 3) mit A, B oder X gleich H (Wasserstoff).

Zur Synthese wird Zellstoff oder Baumwollinters mit Alkalilauge aktiviert. Diese Aktivierung kann durch die Synthese und Isolierung einer Alkalicellulose geschehen und alternativ durch Herstellung einer wasserfeuchten Alkalicellulose oder einer Suspension der Cellulose in wassermischbaren Lösungsmitteln und anschließender Zugabe einer wäßrigen Alkalilösung.

Hierzu können weiterhin aktivierende Behandlungen wie z. B. mit flüssigem Ammoniak oder Ultraschall hinzugezogen werden.

Vor Beginn der Veretherungs- und Veresterungsreaktion wird die Wasser und/oder lösemittelfeuchte Alkalicellulose einer Lösemittelwäsche unterzogen, wodurch ein definierter NaOH-Gehalt eingestellt werden kann.

Ebenso kann die Aktivierung durch Aufsprühen einer wäßrigen NaOH-Lauge vorgenommen werden. Auf die so aktivierte Cellulose wird das Epoxid aufgepfropft und vor der Reaktion mit dem Lacton das im Reaktionsansatz vorhandene Wasser abdestilliert. Die Umsetzung mit Epoxiden und Lactonen kann in Suspension oder suspensionsmittelfrei durchgeführt werden.

Hierzu wird zunächst das Epoxid mit der Alkalicellulose zur Reaktion gebracht und anschließend das Lacton mit der entstandenen alkalischen Hydroxyalkylcellulose umgesetzt. Hierbei ist es völlig überraschend, daß das Lacton sich ohne weiteres auf die Hydroxyalkylcellulose aufpfropfen läßt, da bekannterweise Polyethylenglykole durch Komplexierungseigenschaften gegenüber Alkalimetallen eine ringöffnende Polymerisation nicht ermöglichen (vergl.: H. Höcker, Eur. Polym. J. Vol.27, No. 12, 1323-1330, 1991).

Bei Anwendung von Suspensionsmitteln wie DMSO, DMAc oder DMF geht das Produkt in Lösung und die Viskosität des Reaktionsgemisches nimmt zu.

In entsprechenden Rührautoklaven, die eine ausreichende Durchmischung des Cellulosepulvers gewährleisten, kann die Synthese suspensionsmittelfrei durchgeführt werden. Das hierbei entstehende Produkt kann ohne weitere Aufarbeitung zur technischen Weiterverarbeitung, wie z.B. Spritzguß, eingesetzt werden.

Nach der Beendigung der Reaktion in Suspensionsmittelsystemen wird das entstandene, wasserunlösliche Polymer mit Wasser ausgefällt, filtriert und getrocknet und kann sofort weiterverarbeitet, wie z. B. durch Spritzguß in Formteile überführt werden.

Durch Extraktion mit Wasser oder Lösungsmitteln wie z. B. Methylenchlorid oder Acetonitril kann das lösemittelfrei synthetisierte Cellulosederivat von eventuell vorhandenen Mono- bzw. Oligomeren oder Carbonsäuresalzen befreit werden.

Die so synthetisierten Polymere sind spritzgußfähig und thermoplastisch mit je nach Substitutionsgrad und Verhältnis von Alkylenoxid und Lacton variablem Schmelzpunkt zwischen 80°C - 250°C. Dieser weit einstellbare Schmelzbereich ist überraschend und war für den Fachmann nicht vorhersagbar, da die reinen Cellulose-Lacton-Pfröpfe Schmelzbereiche zwischen 180 und 250°C aufweisen und reine Hydroxyalkylcellulosen erst bei hohen Substitutionsgraden (MS größer als 4,0) thermoplastisch sind und Schmelzpunkte zwischen 180 und 200°C aufweisen.

Für die Synthese ist technisch zugängliche Cellulose, wie z. B. Holzzellstoff und Baumwollinters beliebigen Molgewichts oder andere zellstoffhaltige Produkte wie z. B. Sägespäne, geeignet. Zur Einstellung des Molgewichtes ist es möglich während der Behandlung mit Alkalihydroxyden einen oxidativen Kettenabbau durch Luftsauerstoff nach bekannten Verfahren durchzuführen. Die eingesetzten Faserlängen sind beliebig, bevorzugt kürzer als 2000 µm, besonders bevorzugt kürzer als 1000 µm.

Wird die Synthese in Suspensionsmitteln durchgeführt, eignen sich hierzu wassermischbare Verbindungen oder Mischungen aus ihnen wie DMSO, DMF, DMAc, Dioxan, THF, Pyridin, NMP, Methyl-Morpholin usw., weniger geeignet sind Alkohole.

Als Epoxide eignen sich bevorzugt Monoepoxide wie Ethylenoxid, Propylenoxid, 1,2-Epoxybutan, 1,2-Epoxyhexan, 1,2-Epoxyoctan, 1,2-Epoxydecan, 1,2-Epoxydodecan, 1,2-Epoxyhexadecan, 1,2-Epoxyoctadecan, Stearinsäureglycidylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat, Allylglycidylether, Butadienmonoxid, Glycidol, 3-Glycidoxypropyltrimethoxysilan, 3-Glycidoxypropyltriethoxysilan, Di-N-Butylamino-2,3-epoxypropan, Diethyl-β,γ-epoxypropylphosphat, 4-(2,3-Epoxypropyl)morpholin und Styroloxid.

Die Aktivierung der Cellulose erfolgt mit Alkalilauge. Hierbei können verschiedene Methoden angewendet werden.

Zum einen kann die Alkalicellulose durch Behandlung der Cellulose mit wäßriger Alkalilauge (Maischalkalisierung), anschließender Filtration und Trocknung hergestellt werden. Die Konzentration der Natronlaugelösung beträgt hierbei 5-50 Gew.-%, vorzugsweise 10-25 Gew.-% Der Alkaligehalt der so hergestellten Alkalicellulose beträgt 1-30 Gew.-%, vorzugsweise 5-15 Gew.-%.

Alternativ läßt sich die Behandlung der Cellulose mit wäßriger Alkalilauge in einer Suspension der Cellulose in organischen Suspensionsmitteln wie z. B. Alkoholen vornehmen (Slurry-Verfahren).

Sowohl die in der Maischalkalisierung als auch die im Slurry-Verfahren dargestellten Alkalicellulosen können wie in EP 0093368 beschrieben mit Lösungsmitteln/gemischen extrahiert werden. Hierdurch kann ungebundenes Alkali und überschüssiges Wasser aus der Alkalicellulose entfernt werden.

Eine weitere Variante der Aktivierung ist die Cellulose bereits im Rührautoklaven mit wäßrigem Alkali zu behandeln und direkt anschließend die Reaktion mit dem Epoxid durchzuführen. Anschließend wird das im Reaktionsgemisch vorhandene Wasser abdestilliert und das Lactid auf den noch alkalischen Celluloseether aufgepfropft.

Zur Umsetzung mit dem Epoxid beträgt die Reaktionstemperatur 20-130°C, vorzugsweise 50-80°C. Die Reaktionszeiten betragen 0,5-2h, vorzugsweise 0,5-1h.

Die Reaktionstemperatur des alkalischen Celluloseethers mit dem Lacton beträgt 60-170°C, vorzugsweise 90-140°C, besonders bevorzugt 110-130°C. Die Reaktionszeigen betragen 0,5-4h, vorzugsweise 1-2h.

Die nach dem erfindungsgemäßen Verfahren hergestellten Cellulose-hydroxyalkylhydroxycarbonsäureester sind wasserunlöslich dagegen löslich in organischen Lösungsmitteln wie DMSO, DMF, DMAc, Dioxan, THF, oder n-Butanol.

Weiterhin sind diese Verbindungen thermoplastisch und mit den herkömmlichen Verarbeitungstechniken in z. B. Spritzgußformteile oder Folien überführbar.

Die erfindungsgemäßen Cellulosederivate sind geeignet zur Herstellung von (biologisch abbaubaren) Folien, Töpfen, Flaschen und anderen Formkörpern. Sie können in ihren Eigenschaften durch die Herstellung von Blends beliebiger Zusammensetzung mit anderen (biologisch abbaubaren) Komponenten, wie z. B. Stärke oder underivatisierte Cellulose, variiert werden. Die Kombination mit Weichmachern ist dabei ebenfalls möglich.

## Patentansprüche

1. Thermoplastische, wasserunlösliche, Cellulose-hydroxyalkyl-hydroxycarbonsäureester, der allgemeinen Struktur:
Cell-O-R
wobei Cell-O die substituierte OH-Gruppe einer polymeren Celluloseeinheit ist und R entweder ein mono- und/oder polymerer Hydroxyalkylether-hydroxycarbonsäureester der Struktur X ist:
X = -A-B
in der A eine lineare Polyetherkette ist:
A = (-D-O-)ₙ
in der D eine lineare aliphatische verzweigte oder unverzweigte Kette mit 2 bis 11 C-Atomen bedeutet und n eine ganze Zahl gleich oder größer als 1 ist, und B eine lineare Polyesterkette ist: 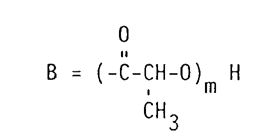 und m eine ganze Zahl gleich oder größer als 1 ist, oder R ist gleich A oder B oder X und deren Kombination in beliebigem Verhältnis, oder R ist entsprechend dem Substitutionsgrad pro Anhydroglucoseeinheit (max. 3) mit A, B oder X gleich H (Wasserstoff).

2. Verfahren zur Herstellung wasserunlöslicher und thermoplstischer Cellulosederivate gemäß Anspruch 1, dadurch gekennzeichnet, daß die Cellulose ungelöst, mit Epoxiden und Lactid zur Reaktion gebracht wird, wobei man die Cellulose mit Alkalilauge aktiviert und anschließend entweder mit oder ohne Suspensionsmittel mit Epoxiden und anschließend im gleichen Reaktionsansatz mit Lactid umsetzt.

3. Verfahren nach Anspruch 2, dadurch gekennzeichnet, daß die Cellulose durch Behandlung mit wäßriger NaOH oder Mischungen aus wäßriger NaOH mit wasserlöslichen organischen Lösungsmitteln voraktiviert wird.

4. Verfahren nach den Ansprüchen 2 oder 3 in dem die Alkalicellulose alternativ durch Trocknung oder Extraktion mit organischen Lösungsmitteln von Wasser befreit wird.

5. Verfahren nach den Ansprüchen 2 bis 4, in dem die wasserfeuchte Alkalicellulose mit Epoxiden zur Reaktion gebracht wird, anschließend das Wasser abdestilliert und die noch alkalische Hydroxyethylcellulose mit Lactid umgesetzt wird.

6. Formteile, Folien, Fasern und Blends, dadurch gekennzeichnet, daß sie mindestens zu 10% aus Cellulose-hydroxyalkyl-milchsäureester gemäß Anspruch 1 bestehen.

## Claims

1. Thermoplastic, water-insoluble, cellulose hydroxyalkyl hydroxycarboxylic acid esters of the general structure:
Cell-O-R
wherein Cell-O is the substituted OH group of a polymeric cellulose unit and R is either a monomeric and/or polymeric hydroxyalkylether hydroxycarboxylic acid ester of the structure X:
X = -A-B
in which A is a linear polyether chain:
A = (-D-O-)ₙ
in which D signifies a linear aliphatic branched or unbranched chain with 2 to 11 C atoms and n is a whole number equal to or greater than 1, and B is a linear polyester chain: 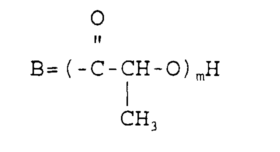 and m is a whole number equal to or greater than 1, or R is equal to A or B or X and a combination thereof in any ratio, or R is equal to H (hydrogen) according to the degree of substitution per anhydroglucose unit (max. 3) with A, B or X.

2. Process for the production of water-insoluble and thermoplastic cellulose derivatives according to claim 1, characterised in that the cellulose is reacted undissolved with epoxides and lactide, the cellulose being activated with lye and subsequently reacted either with or without a suspending agent with epoxides and subsequently in the same reaction mixture with lactide.

3. Process according to claim 2, characterised in that the cellulose is pre-activated by treating with aqueous NaOH or mixtures of aqueous NaOH with watersoluble organic solvents.

4. Process according to claims 2 or 3 in which the alkali cellulose is freed from water by drying or, alternatively, by extraction with organic solvents.

5. Process according to claims 2 to 4, in which the water-moist alkali cellulose is reacted with epoxides, the water is subsequently distilled off and the still alkaline hydroxyethylcellulose is reacted with lactide.

6. Mouldings, films, fibres and blends, characterised in that they consist of at least 10 % cellulose hydroxyalkyl lactic acid esters according to claim 1.

## Revendications

1. Esters hydroxyalkyl-hydroxycarboxyliques de cellulose insolubles dans l'eau, thermoplastiques, répondant à la structure générale:
Cell-O-R
où Cell-O représente le groupe OH substitué d'une unité de cellulose polymère et R, soit représente un éther hydroxyalkylique-ester hydroxycarboxylique monomère et/ou polymère répondant à la structure X:
X = -A-B
dans laquelle A représente une chaîne polyéther linéaire:
A = (-D-O-)ₙ
dans laquelle D représente une chaîne aliphatique linéaire ramifiée ou non ramifiée contenant de 2 à 11 atomes de carbone, et n représente un nombre entier égal ou supérieur à 1, et B représente une chaîne polyester linéaire: 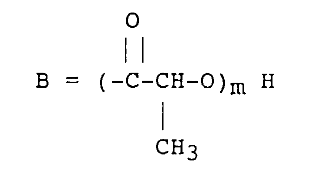 et m représente un nombre entier égal ou supérieur à 1, soit est égal à A ou B ou X ou à leur combinaison dans n'importe quels rapports, soit en fonction du degré de substitution par unité d'anhydroglucose (maximum 3) avec A, B ou X, est égal à H (un atome d'hydrogène).

2. Procédé pour la préparation de dérivés de cellulose insolubles dans l'eau et thermoplastiques selon la revendication 1, caractérisé en ce qu'on amène la cellulose à réagir à l'état non dissous avec des époxydes et du lactide en activant la cellulose avec un alcali et en la faisant ensuite réagir avec des époxydes, soit en présence, soit en l'absence d'agents de mise en suspension et ensuite, dans la même masse réactionnelle, avec du lactide.

3. Procédé selon la revendication 2, caractérisé en ce qu'on soumet la cellulose à une préactivation par traitement avec du NaOH aqueux ou avec des mélanges de NaOH aqueux et de solvants organiques hydrosolubles.

4. Procédé selon la revendication 2 ou 3, dans lequel on libère la cellulose alcaline de l'eau en variante par séchage ou par extraction dans des solvants organiques.

5. Procédé selon les revendications 2 à 4, dans lequel on amène à réagir la cellulose alcaline humidifiée avec de l'eau, avec des époxydes, ensuite on sépare l'eau par distillation et on fait réagir l'hydroxyéthylcellulose encore alcaline avec du lactide.

6. Eléments moulés, feuilles, fibres et mélanges homogènes, caractérisés en ce qu'ils sont constitués, jusqu'à concurrence d'au moins 10%, d'esters hydroxyalkyl-lactiques de cellulose selon la revendication 1.
